# FASCICULE DE BREVET EUROPEEN

(11) **EP 0 445 033 B1**
(45) Date de publication et mention de la délivrance du brevet: **26.04.1995**
(21) Numéro de dépôt: 91400536.8
(22) Date de dépôt: 27.02.1991
(51) Int. Cl.: G21F 7/00, G21F 7/06, B25J 21/00

(54) **Enceinte mobile d'intervention permettant d'accéder à une installation placée dans une cellule active**
Mobiles Arbeitsgefäss zum Einsatz in einer Anlage in einer heissen Zelle
Mobile intervention confinement allowing access to an installation in a hot cell

(30) Priorité: 28.02.1990 FR 9002501
(43) Date de publication de la demande: 04.09.1991
(73) Titulaire: COGEMA (COMPAGNIE GENERALE DES MATIERES NUCLEAIRES), F-78141 Velizy-Villacoublay Cédex (FR)
(72) Inventeur: Lestournel, Eric, F-50690 Martinvast (FR); Beaumont, Patrice, F-50460 Querqueville (FR); Lecourtois, Armand, F-50120 Equeurdreville (FR)
(74) Mandataire: Poulin, Gérard

(56) Documents cités:
- EP-A- 0 050 561
- EP-A- 0 123 598
- FR-A- 2 074 780
- US-A- 4 687 400

## Description

L'invention concerne une enceinte mobile d'intervention conçue de façon à pouvoir effectuer différentes missions, telles que l'inspection, le nettoyage ou l'intervention sur certains appareils placés à l'intérieur d'une cellule active, dans une installation nucléaire telle qu'une installation de retraitement des éléments combustibles irradiés préalablement dans des réacteurs nucléaires.

Dans le document EP-A-0 123 598, il est décrit une enceinte mobile d'évacuation de matériel (E.M.E.M.) à barillet, permettant de remplacer certaines pièces des appareils placés à l'intérieur d'une cellule active et de transporter ces pièces contaminées jusqu'à un lieu de stockage approprié. Cette enceinte comprend un système à barillet dont les alvéoles permettent de recevoir le sous-ensemble mobile (S.E.M.) obturant normalement l'accès à l'appareil considéré, la pièce contaminée, une pièce neuve et éventuellement, un outil d'intervention.

On comprend aisément qu'une telle enceinte E.M.E.M. ne permet que des interventions très spécifiques, même dans le cas où une alvéole est prévue pour loger un outil d'intervention. En particulier, cette enceinte ne permet en aucun cas d'observer l'état d'un matériel, puis d'effectuer sur ce dernier une intervention nécessitée par cet état.

L'invention a précisément pour objet une enceinte mobile d'intervention complémentaire et d'un type différent, conçue de façon à permettre à des opérateurs d'examiner différentes parties des appareils placés dans la cellule active et d'intervenir sur ces appareils, notamment pour en effectuer le nettoyage, ce nettoyage étant alors adapté à la nature des débris éventuels à évacuer ainsi qu'à l'emplacement de ces débris, ou des interventions simples telles que la pose ou dépose de pièces ou la condamnation d'orifices.

Conformément à l'invention, ce résultat est obtenu au moyen d'une enceinte mobile d'intervention apte à être accostée sur un orifice d'accès formé dans une paroi supérieure d'une installation, afin d'intervenir sur cette dernière, cette enceinte comprenant :
- un caisson étanche pourvu d'une paroi latérale ; d'un plancher percé d'une ouverture d'accès circulaire normalement obturée par une porte ; et d'un plafond comportant un plateau tournant d'axe parallèle et décalé par rapport à l'axe de l'ouverture d'accès ;
- un barillet porte-outils logé dans le caisson et apte à tourner autour d'un axe parallèle et décalé par rapport à l'axe de l'ouverture d'accès, ce barillet comportant des réceptacles à sa périphérie ;
- des éléments modulaires comprenant au moins une rallonge et au moins un outil, aptes à être reçus individuellement dans lesdits réceptacles ;

caractérisé par le fait que :
- l'axe du barillet porte-outils est également parallèle et décalé par rapport à l'axe du plateau tournant ;
par le fait que l'enceinte comprend de plus :
- un support escamotable logé dans le caisson et apte à occuper une position rétractée totalement dégagée de l'ouverture d'accès et une position active située selon l'axe de cette dernière, de façon à pouvoir supporter provisoirement les éléments modulaires ;
- un mécanisme de supportage et de commande de la perche d'intervention, implanté sur le plateau tournant en un emplacement apte à être placé à volonté selon l'axe de l'ouverture d'accès et selon l'axe d'un poste de prise sur lequel peut être amené chaque réceptacle du barillet, sous l'effet d'une rotation du plateau tournant, ce mécanisme permettant des mouvements de translation de la perche selon son axe, de rotation autour de son axe, de pivotement autour dudit emplacement et d'actionnement de l'outil ; et
- des moyens pour commander, depuis l'extérieur du caisson, des rotations du plateau tournant, du barillet porte-outils et du support escamotable; et par le fait que les éléments modulaires et l'outil sont aptes à être assemblés bout à bout pour former une perche d'intervention.

Avec une enceinte de ce type, un ou plusieurs opérateurs placés à l'extérieur et disposant d'une vision à la fois à l'intérieur de l'enceinte au travers de hublots prévus dans la paroi du caisson, ainsi qu'à proximité de l'appareil sur lequel on désire intervenir au moyen de caméra portée par l'outil, peuvent effectuer, par exemple, des missions d'inspection, complétées éventuellement par un examen endoscopique de débouché d'orifice, des missions de nettoyage telles que la préhension, l'aspiration et l'évacuation de débris et le nettoyage haute pression de certaines zones telles que des portées de joints, ainsi que des missions d'interventions telles que la pose de pièces ou la condamnation d'orifices.

Par ailleurs, le caractère modulaire de la perche d'intervention permet d'adapter la longueur de celle-ci à chaque mission.

A cet effet, il est prévu sur chaque élément modulaire un moyen de verrouillage apte à occuper une position verrouillée de liaison avec un élément modulaire voisin et une position déverrouillée de montage et de démontage. Des moyens de manipulation annexes manoeuvrés de l'extérieur du caisson et placés dans ce dernier pour commuter les moyens de verrouillage entre leurs positions verrouillée et déverrouillée sont également prévus.

Afin d'éviter un déverrouillage accidentel de la liaison entre les éléments modulaires, chaque moyen de verrouillage est avantageusement bloqué par un moyen de blocage lorsque le module correspondant est suspendu, ce moyen de blocage ne libérant le moyen de verrouillage correspondant que lorsque le module est posé.

Afin notamment de permettre l'actionnement du moyen de verrouillage, les moyens de manipulation annexes comprennent de préférence au moins un bras de manipulation auxiliaire traversant la paroi latérale du caisson et au moins une pince annexe montée sur ce bras et apte à être déposée sur un râtelier porte-pince placé dans le caisson.

Pour faciliter l'évacuation des déchets, un réceptacle sur lequel peut être placée une poubelle est prévu sur le plancher du caisson, en un emplacement pouvant être aligné avec la perche d'intervention lors d'une rotation du plateau tournant. Cette poubelle peut être introduite et évacuée par un passage normalement fermé par une porte, ce passage étant formé dans le caisson à proximité du réceptacle de la poubelle.

Un mode de réalisation préféré de l'invention va à présent être décrit, à titre d'exemple non limitatif, en se référant aux dessins annexés, dans lesquels :
- la figure 1 est une vue de côté et en coupe représentant schématiquement une enceinte mobile d'intervention conforme à l'invention, accostée par l'intermédiaire d'un sas à opercules sur la paroi supérieure d'une cellule active ;
- la figure 2 est une vue en coupe à plus grande échelle de l'enceinte mobile d'intervention de la figure 1 ;
- la figure 3 est une vue en coupe verticale de l'enceinte mobile selon un plan perpendiculaire au plan de coupe de la figure 2 ;
- la figure 4 est une vue de dessus et en coupe montrant schématiquement l'agencement relatif de différents organes placés à l'intérieur du caisson étanche ;
- la figure 5 est une vue en coupe représentant à plus grande échelle le mécanisme de supportage et de commande de la perche d'intervention ;
- la figure 6 est une vue en coupe longitudinale représentant à plus grande échelle la liaison entre deux éléments modulaires de la perche d'intervention ;
- la figure 7 est une vue en coupe selon la ligne VIII-VIII de la figure 6 ;
- les figures 8a et 8b sont des vues de détail représentant respectivement en position de blocage et en position libre le moyen de blocage évitant l'ouverture accidentelle des moyens de verrouillage illustrés sur les figures 6 et 7 ;
- la figure 9 représente une pince de préhension prévue pour équiper la perche d'intervention ; et
- la figure 10 représente, en coupe longitudinale partielle, une rallonge d'aspiration prévue pour être fixée à l'extrémité de la perche d'intervention.

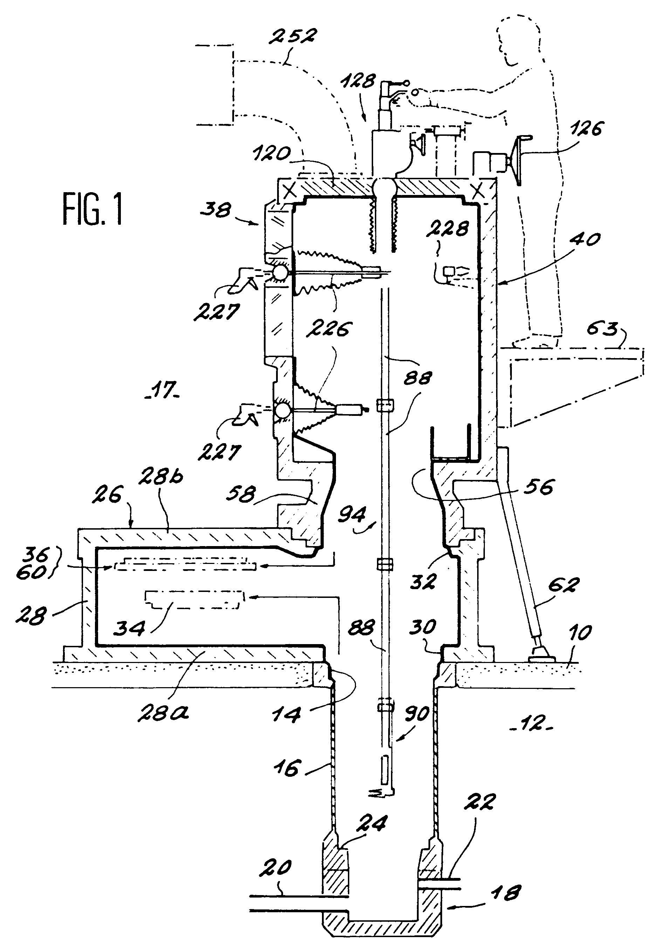

Sur la figure 1, la référence 10 désigne la paroi supérieure horizontale d'une cellule active 12 dans laquelle est située une installation nucléaire telle qu'une installation de retraitement d'éléments de combustible nucléaire préalablement irradiés dans des réacteurs nucléaires.

A certains emplacements nécessitant une intervention périodique, la paroi 10 est traversée par un orifice d'accès 14, prolongé à l'intérieur de la cellule 12 par un fourreau 16. A l'intérieur du fourreau 16 est normalement placé un sous-ensemble mobile (S.E.M.) assurant la continuité de la protection radiologique et du confinement de la cellule 12 par rapport à la zone d'intervention 17 située au-dessus de la paroi 10. Ce sous-ensemble mobile est enlevé préalablement à l'intervention proprement dite, au moyen d'une enceinte mobile d'évacuation de matériel (E.M.E.M.) d'un type quelconque, qui ne fait pas partie de l'invention.

Le fourreau 16 permet d'accéder à une installation 18 placée à l'intérieur de la cellule 12. Dans l'exemple illustré sur la figure 1, cette installation peut contenir une vanne de régulation servant à contrôler l'écoulement d'un liquide entre deux canalisations 20 et 22, au moyen d'un clapet appartenant au sous-ensemble mobile (non représenté) et coopérant avec un siège 24 situé entre les canalisations 20 et 22. Les installations sur lesquelles on peut intervenir avec l'enceinte mobile selon l'invention peuvent toutefois être de nature différente et concerner, par exemple, des agitateurs, des filtres de ventilation, des pompes, des robinets de sectionnement, des roues doseuses, des analyseurs, des pH/mètres, des conductivimètres, etc..

Sur la figure 1, la référence 26 désigne de façon générale un sas à opercules, ramené dans le plan de coupe. Ce sas 26, d'utilisation courante, ne sera pas décrit en détail.

Le sas 26 est le même que celui qui est utilisé pour servir d'interface entre l'enceinte E.M.E.M. dans laquelle à été placé auparavant le sous-ensemble mobile S.E.M. obturant normalement le fourreau 16 et la paroi 10 de la cellule 12. Ce sas 26 comprend une enveloppe de confinement et de protection radiologique 28, équipée de moyens (non représentés) permettant de l'accoupler sur la paroi 10 en une position telle que deux ouvertures d'accès en vis-à-vis 30 et 32, formées respectivement dans une paroi horizontale inférieure 28a et dans une paroi horizontale supérieure 28b de l'enveloppe 28, soient alignées verticalement avec l'orifice d'accès 14 formé dans la paroi 10. Ces ouvertures 30 et 32 sont normalement obturées respectivement par des portes 34 et 36 dont l'ouverture et la fermeture, ainsi que l'escamotage à l'intérieur du sas 28 permettant de dégager le passage entre les ouvertures 30 et 32 sont commandés par un mécanisme comportant un chariot (non représenté) placé à l'intérieur de l'enveloppe 28.

Sur la figure 1, la référence 38 désigne de façon générale une enceinte mobile d'intervention conforme à l'invention. Cette enceinte mobile d'intervention est prévue pour être accostée sur la paroi supérieure 28b du sas 28, de façon à permettre d'accéder à la partie interne de l'installation 18 logée dans la cellule 12, au travers des ouvertures 32 et 30 et de l'orifice d'accès 14, afin d'intervenir sur cette installation 18 tout en assurant la continuité de la protection radiologique et du confinement de la cellule 12 par rapport à la zone d'intervention 17 située au-dessus de la paroi 10.

L'enceinte mobile d'intervention 38 conforme à l'invention va à présent être décrite plus en détail en se référant aux figures 1 à 4.

L'enceinte mobile d'intervention 38 comprend tout d'abord un caisson étanche 40, de forme parallélépipédique, essentiellement constitué de parois d'acier inoxydable. Ce caisson comprend une paroi latérale, de section horizontale rectangulaire, présentant une face avant verticale 42, une face arrière verticale 44 et deux faces latérales verticales 46 et 48. Le caisson étanche 40 comprend également un plancher horizontal 52 et un plafond horizontal 50.

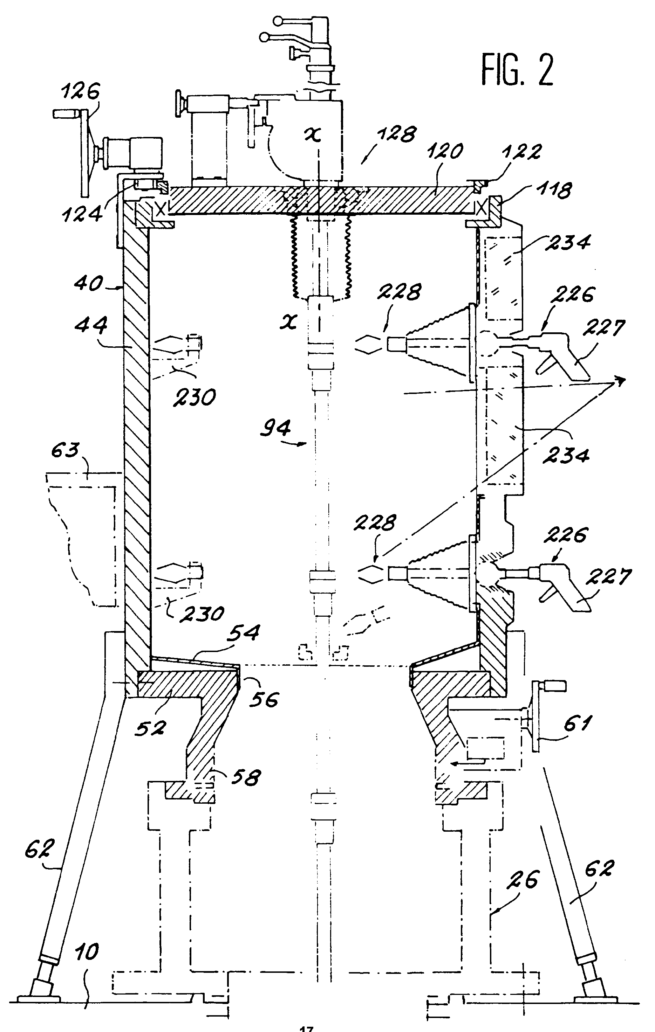

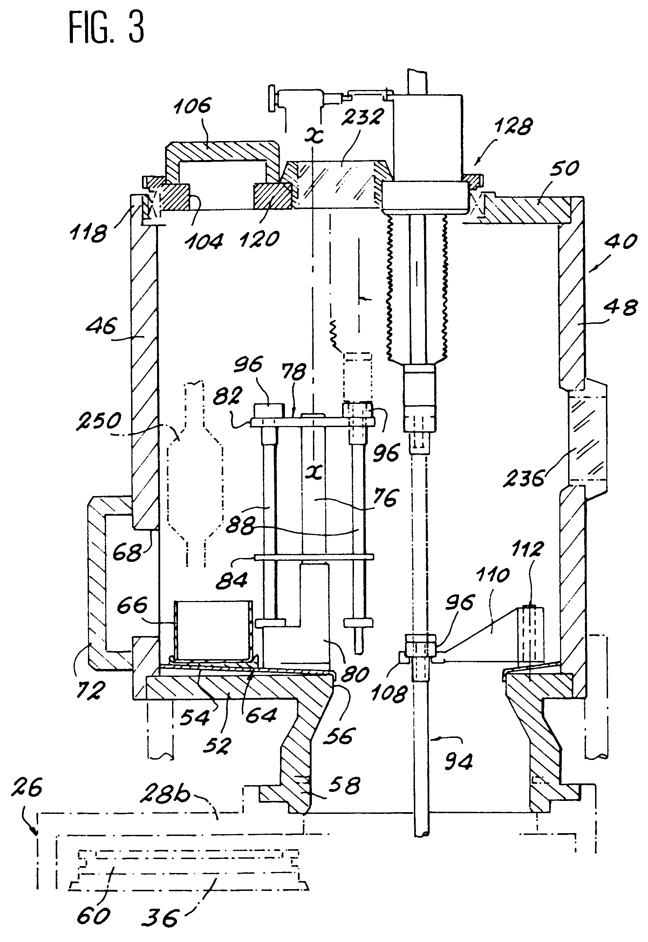

Comme le montrent notamment les figures 2 et 3, le plancher 52 est constitué d'une paroi sur laquelle est placé un fond 54 formé en pointe de diamant. La forme de ce fond permet, d'une part, d'éviter toute rétention de liquide et, d'autre part, de faciliter la préhension de tout objet qui y serait déposé.

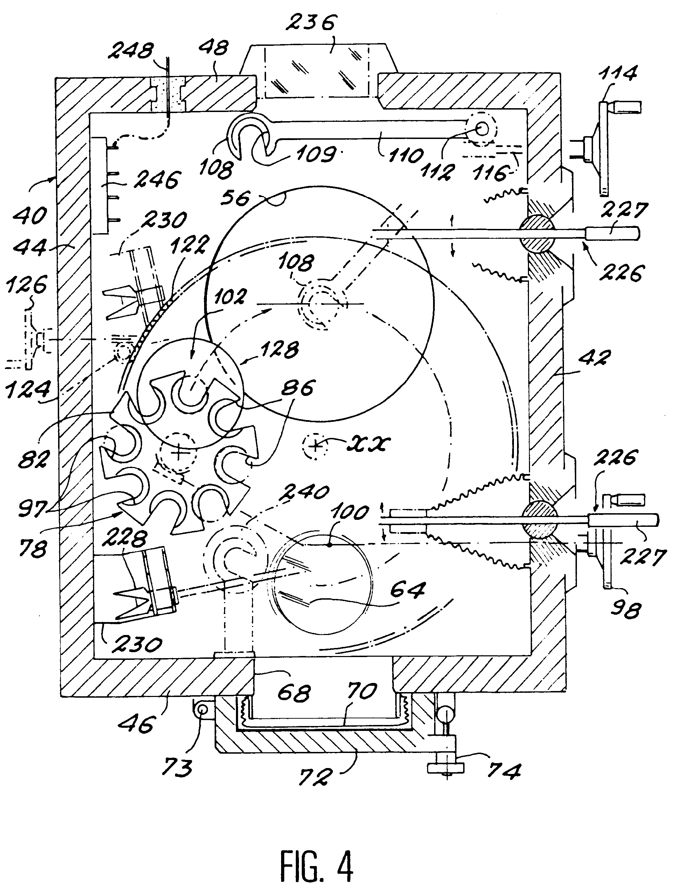

Le plancher 52 est percé, à égale distance des faces avant 42 et arrière 44, et à proximité de la face latérale 48 (voir figure 4) d'une ouverture d'accès circulaire 56. Cette ouverture d'accès 56 est prolongée vers le bas par un corps cylindrique 58 comportant à son extrémité inférieure un mécanisme de verrouillage de type connu permettant de fixer de façon étanche l'enceinte mobile 38 sur la face supérieure 28b du sas 26 afin que l'ouverture d'accès 56 soit axialement alignée avec les passages 30 et 32 et avec l'orifice d'accès 14.

L'extrémité inférieure du corps cylindrique 58 est normalement obturée par une porte 60 qui s'accouple avec la porte 36 du sas 26 pour venir s'escamoter à l'intérieur de ce dernier. La porte 60 est normalement verrouillé de façon étanche dans le corps cylindrique 58 par un mécanisme de verrouillage 61 (figure 2) monté sur ce dernier. Ce mécanisme peut notamment comporter des doigts pivotants aptes à pénétrer dans une gorge formée à la périphérie de la porte.

Lorsque l'accouplement de l'enceinte mobile d'intervention 38 sur le sas 26 a été effectué, des pieds supports 62, démontables et réglables en hauteur (figures 1 et 2) sont fixés sur le caisson étanche 40, afin que ce dernier repose de façon stable et avec une assiette bien définie sur la paroi supérieure 10.

Une passerelle 63, également démontable, est en outre fixée au moins sur la face arrière 44 du caisson 40, afin de permettre aux opérateurs d'accéder aux organes d'observation et de commande situés dans la partie supérieure de l'enceinte mobile 38. L'accès à cette passerelle est facilité, par exemple, par un escalier (non représenté).

En un emplacement proche de la face latérale 46 et situé à égale distance des faces avant 42 et arrière 44 du caisson étanche 40, le plancher 52 comporte un réceptacle 64 prévu pour recevoir une poubelle 66 (figures 3 et 4). Afin de permettre l'introduction et l'évacuation de la poubelle 66 et éventuellement d'autres matériels, la face latérale 46 comprend dans sa partie inférieure et à égale distance des faces avant 42 et arrière 44 un passage circulaire 68 normalement obturé par un rond de sac 70. Une porte 72 articulée par une charnière 73 à l'extérieur de la face latérale 46 permet d'assurer la continuité de la protection radiologique autour du rond de sac 70. La fermeture de cette porte 72 est assurée par un dispositif de fermeture manuelle 74.

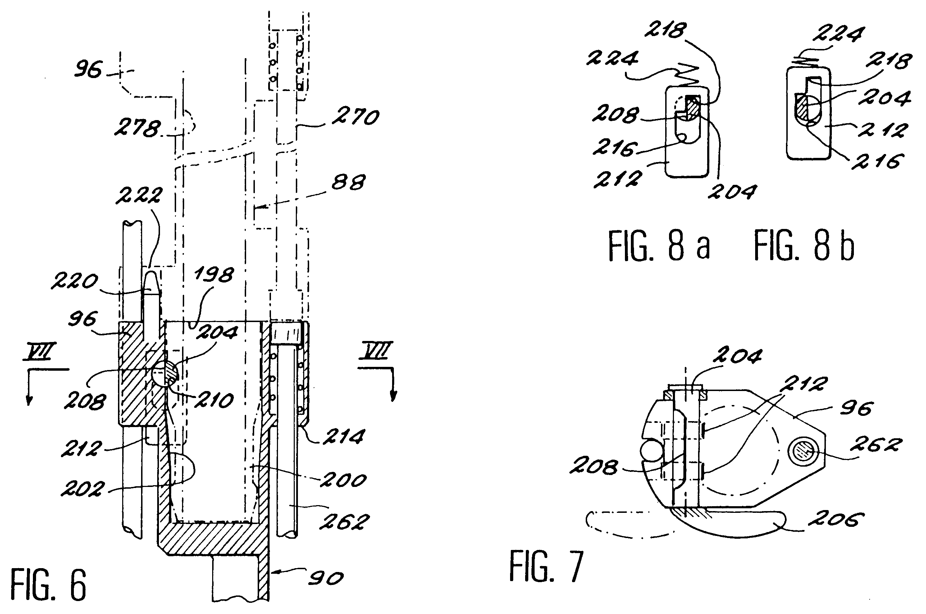

A proximité de la face arrière 44 et du côté de la face latérale 46, le plancher 52 du caisson étanche supporte également l'axe vertical 76 d'un barillet porte-outils 78. L'axe 76 est supporté de façon rotative par une pièce 80 reposant sur le plancher 52. Le barillet 78 comporte de plus deux plaques horizontales 82 et 84 en forme de disques, fixées en leurs centres sur l'axe 76. Sur leurs périphéries, les plaques 82 et 84 présentent des parties en creux 86 (figure 4) régulièrement réparties, les parties en creux des deux plaques étant alignées verticalement. Ces parties en creux 86 constituent des réceptacles, par exemple au nombre de huit dans le mode de réalisation représenté, dans lesquels peuvent être placés des éléments modulaires comprenant des rallonges 88 ainsi que des outils tels qu'une pince 90 et un embout d'aspiration 92 qui seront décrits plus en détail ultérieurement en se référant respectivement aux figures 6, 7, 8, 9 et 10.

Les différents éléments modulaires 88, 90 et 92 sont conçus pour pouvoir être assemblés bout à bout à l'intérieur du caisson étanche 40,pour former une perche d'intervention 94 (figure 1) dont les caractéristiques sont parfaitement adaptées à chaque mission particulière.

Chacun des éléments modulaires constitués par les rallonges 88 et par les outils 90 et 92 peut être placé sur l'un quelconque des réceptacles du barillet porte-outils 78 définis par les parties en creux 86. A cet effet, chacun de ces éléments comporte à son extrémité supérieure une collerette 96 pouvant reposer sur la plaque supérieure 82 lorsque cet élément est reçu dans l'un des réceptacles. Plus précisément, la collerette 96 pénètre dans un lamage de sécurité 97 (figure 4) formé sur la face supérieure de la plaque 82, autour de chaque partie en creux 86.

Comme l'illustre notamment la figure 4, la rotation du barillet porte-outils 78 peut être commandée manuellement depuis l'extérieur du caisson étanche 40 par un volant 98. Ce volant permet d'entraîner en rotation l'axe 76 dans l'un ou l'autre sens, par l'intermédiaire d'un mécanisme de transmission d'un type quelconque représenté schématiquement en 100 sur la figure 4. Il est à noter que ce mécanisme de commande de la rotation du barillet permet également un indexage de la position angulaire de ce dernier, grâce auquel chacun des réceptacles constitués par les parties en creux 86 peut être placé à tour de rôle en un emplacement appelé poste de prise et désigné par la référence 102.

Le plancher 52 du caisson étanche 40 porte également un support escamotable 108 illustré notamment sur les figures 3 et 4. Ce support est constitué par un disque horizontal échancré de façon à lui donner la forme d'un crochet. Il est placé à l'extrémité d'un bras rectiligne 110 dont l'extrémité opposée est articulée autour d'un axe vertical 112 fixé sur le plancher 54, dans l'angle formé par la face avant 42 et par la face latérale 48.

Cet agencement permet de déplacer le support 108 entre une position escamotée représentée en trait plein sur la figure 4, dans laquelle le support 108 et le bras 110 sont pratiquement accolés à la face latérale 48 et dégagent totalement l'ouverture d'accès 56, et une position active, illustrée en traits mixtes sur la figure 4, dans laquelle le support 108 est aligné verticalement avec l'axe de l'ouverture d'accès 56. L'échancrure formée dans le disque constituant le support escamotable 108 est ouverte pratiquement à angle droit par rapport au bras 110 et orientée vers l'ouverture d'accès 56 lorsque le support est dans sa position rétractée. Un lamage 109 (figure 4) est formé autour de l'échancrure, sur la face supérieure du support 108, pour recevoir la collerette 96 de chacun des éléments modulaires.

Le pivotement du bras 110 portant le support escamotable 108 entre les positions escamotées et active de ce dernier est commandé manuellement depuis l'extérieur du caisson étanche 40 par un volant 114 placé sur la face avant 42 et relié au bras 110 par un mécanisme de transmission de mouvement d'un type quelconque, tel que celui qui apparaît schématiquement en 116 sur la figure 4.

Comme l'illustrent notamment les figures 2 et 4, le plafond 50 du caisson étanche 40 comporte une ouverture circulaire délimitée par une couronne à bille 118 sur laquelle est monté un plateau horizontal tournant 120 fermant l'ouverture délimitée par la couronne 118. L'axe vertical x-x de ce plateau est situé à égale distance des faces avant 42, arrière 44 et latérale 46 du caisson et son diamètre n'est que très légèrement inférieur à la distance séparant les faces avant et arrière. De plus, cet axe x-x est situé à égale distance des axes verticaux de l'ouverture d'accès 56, du poste de prise 102 et du réceptacle 64.

Pour permettre de commander la rotation du plateau 120, celui-ci comprend, à l'extérieur du caisson étanche 40, une couronne dentée 122 sur laquelle est engréné un pignon 124 (figure 2), dont l'axe vertical est supporté par la face arrière 44 du caisson, de même qu'un volant de manoeuvre 126 permettant de commander la rotation du pignon 124 par l'intermédiaire d'un mécanisme de transmission à renvoi d'angles.

Le plateau tournant 120 comporte un mécanisme de supportage et de commande de la perche d'intervention 94, désigné de façon générale par la référence 128. Comme l'illustre notamment la figure 4, ce mécanisme 128 est implanté sur le plateau tournant 120 en un emplacement décalé par rapport à l'axe de ce dernier, de telle sorte qu'il peut être placé successivement à la verticale du poste de prise 102, de l'ouverture d'accès 56 et du réceptacle 64.

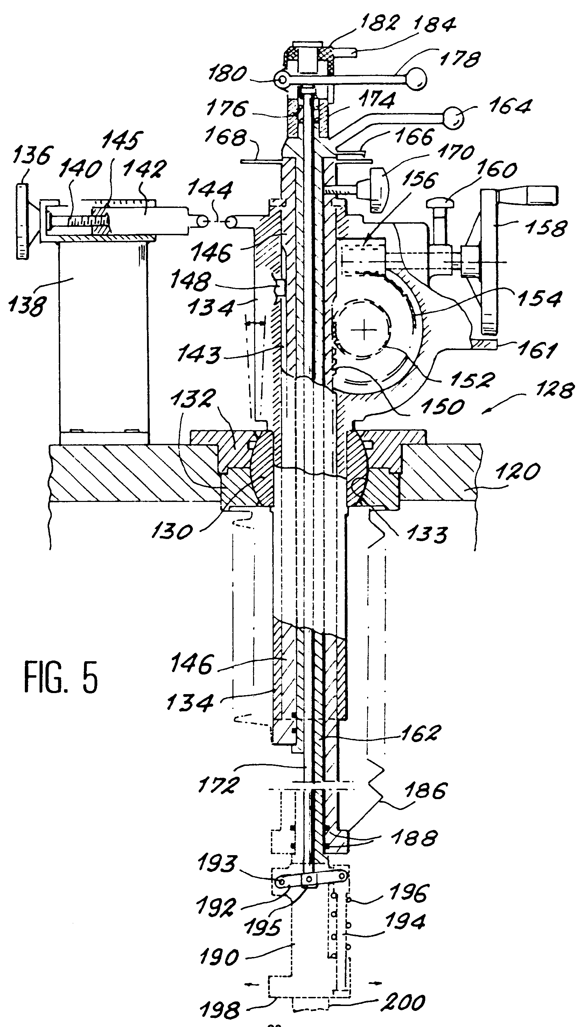

Le mécanisme de supportage et de commande 128 va à présent être décrit en détail en se référant à la figure 5.

Ce mécanisme 128 comprend tout d'abord une rotule 130 montée de façon étanche dans le plateau tournant 120 entre deux flasques 132 fixés sur le plateau 120 et délimitant intérieurement un évidement sphérique 133 dans lequel la rotule 130 peut tourner autour de son centre. Un ensemble tubulaire oscillant 134 est immobilisé en rotation et en translation par rapport à la rotule 130 et traverse cette dernière de telle sorte que l'axe de l'ensemble 134 passe par le centre de la rotule.

L'axe de l'ensemble tubulaire oscillant 134 peut être orienté verticalement ou incliné d'un certain angle, dans une direction quelconque, autour du centre de la rotule 130. L'angle et la direction d'inclinaison de l'ensemble tubulaire oscillant 134 par rapport à la verticale sont réglés au moyen de deux mécanismes de commande d'inclinaison disposés à 90° l'un de l'autre et dont l'un seulement est représenté sur la figure 5.

Chacun de ces mécanismes de commande d'inclinaison comprend un volant 136 dont l'axe horizontal est monté sur un support 138 fixé sur la face supérieure du plateau tournant 120. Ce volant 136 est solidaire d'une vis 140 dont l'axe horizontal coupe la verticale passant par le centre de la rotule 130. Cette vis 140 est vissée dans un écrou 142 immobilisé en rotation dans le support 138. L'extrémité de l'écrou 142 la plus proche de l'ensemble tubulaire oscillant 134 est reliée à cet ensemble par une biellette 144 dont les extrémités sont articulées de façon rotulante respectivement sur l'écrou 142 et sur l'ensemble tubulaire oscillant 134.

La connaissance de l'inclinaison de l'ensemble tubulaire oscillant est obtenue par des graduations formées sur le support 138, en face d'un doigt 145 lié à l'écrou 142.

Le mécanisme 128 de supportage et de commande de la perche d'intervention comprend de plus un ensemble tubulaire coulissant 146 monté dans l'ensemble tubulaire oscillant 134 de façon à pouvoir coulisser à l'intérieur de ce dernier tout en étant immobilisé en rotation, par exemple au moyen d'une clavette 148 fixée dans l'ensemble 134 et reçue dans une rainure de clavette 143 formée sur l'ensemble tubulaire coulissant 146.

La commande de la translation de l'ensemble coulissant 146 à l'intérieur de l'ensemble tubulaire oscillant 134 est réalisée au moyen d'une crémaillère 150 formée sur l'ensemble tubulaire coulissant 146 et sur laquelle s'engrène un pignon 152 dont l'axe orthogonal à l'axe du mécanisme 128 est supporté par l'ensemble tubulaire oscillant 134. L'axe du pignon 152 est également solidaire d'un pignon 154 sur lequel s'engrène une vis-sans-fin 156 dont l'axe, également supporté par l'ensemble tubulaire oscillant 134, porte à son extrémité opposée un volant de manoeuvre 158. Une poignée 160, solidaire d'une tige filetée vissée dans un écrou de freinage (non représenté) logé dans l'ensemble 134, permet de bloquer le mécanisme de commande de translation de l'ensemble coulissant 146, en venant appliquer l'écrou de freinage précité contre l'axe reliant la vis-sans-fin 156 au volant 158.

La position occupée par l'ensemble coulissant 146 à l'intérieur de l'ensemble oscillant 134 est repérée par un index porté par le volant 158, en face d'une graduation formée sur une partie en saillie 161 de l'ensemble 134 entourant partiellement le volant 158.

Pour la bonne compréhension de l'invention, il est à noter que l'ensemble coulissant 146 est représenté en position basse à la partie supérieure de la figure 5, alors que ce même ensemble est représenté respectivement en position haute et en position basse sur les moitiés gauche et droite de la partie basse de la figure 5.

A l'intérieur de l'ensemble tubulaire coulissant 146 est monté un ensemble tubulaire tournant 162 immobilisé en translation dans l'ensemble 146 tout en pouvant tourner librement à l'intérieur de ce dernier. A son extrémité supérieure faisant saillie au-delà de l'extrémité supérieure de l'ensemble 146, l'ensemble tubulaire tournant 162 porte une poignée de manoeuvre 164. La position angulaire de l'ensemble tournant 162 par rapport à l'ensemble coulissant 146 peut être repérée au moyen d'un doigt 166 fixé à l'ensemble tournant 162 immédiatement en dessous de la poignée de manoeuvre 164, ce doigt 166 étant situé en face d'une graduation formée sur un plateau horizontal 168 fixé à l'extrémité supérieure de l'ensemble coulissant 146.

En dévissant ou en vissant une poignée de blocage 170 traversant l'ensemble 146, on peut à volonté autoriser la rotation de l'ensemble 162 ou au contraire l'empêcher.

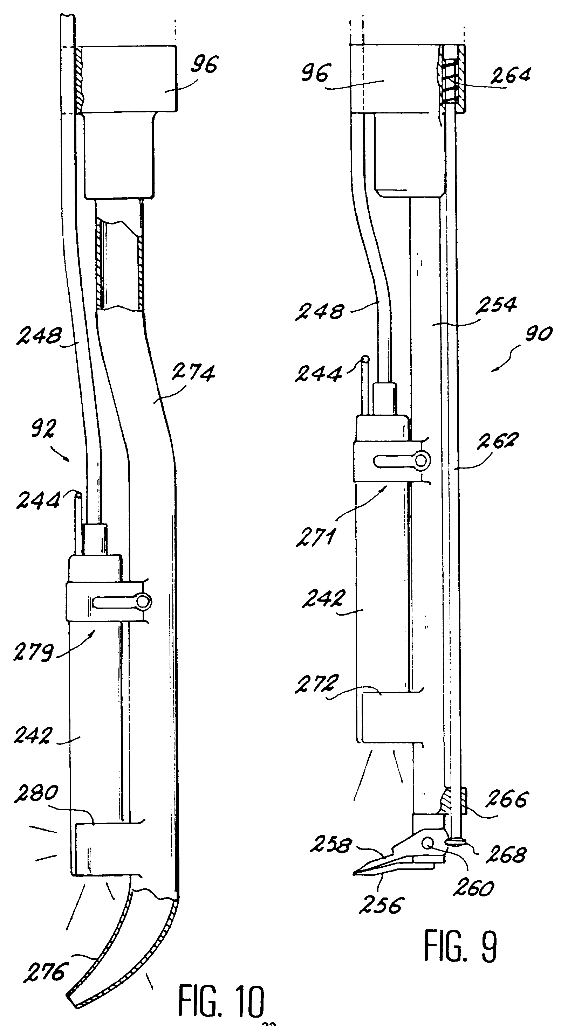

A l'intérieur de l'ensemble tubulaire tournant 162 est montée de façon coulissante une tige cylindrique 172 permettant de commander, comme on le verra par la suite, l'ouverture et la fermeture d'une pince telle que la pince 90 de la figure 9, lorsqu'une telle pince est montée à l'extrémité inférieure de la perche d'intervention 94.

L'extrémité supérieure de la tige cylindrique 172 fait saillie à l'intérieur d'une pièce d'appui 174 fixée à l'extrémité supérieure de l'ensemble tubulaire tournant 162. Un levier de commande 178 est articulé sur la pièce d'appui 174 par un axe 180 orthogonal et décalé par rapport à l'axe du mécanisme 128, commun à la tige 172 et aux ensembles 134, 146 et 162. Ce levier 178 traversela pièce d'appui 174 par deux fentes diamétralement opposées formées sur cette dernière. L'extrémité supérieure de la tige 172 est maintenu en appui contre le levier 178 par un ressort hélicoïdal de compression 176 entourant la tige 172 et dont les extrémités opposées prennent appui, respectivement, contre la face supérieure de l'ensemble tubulaire tournant 162 et contre un épaulement formé sur la tige 172. Par réaction, le levier 178 est plaqué vers le haut contre une surface de came formée sur un capuchon 182 monté rotatif à l'extrémité supérieure de la pièce 174. Ce capuchon 182 comporte une poignée 184 permettant d'en commander la rotation entre une position de déblocage illustrée sur la figure 5, dans laquelle le levier 178 occupe en repos une position sensiblement horizontale correspondant à la fermeture de la pince, tout en pouvant pivoter librement vers le bas pour commander l'ouverture de la pince, et une position de blocage dans laquelle le levier 178 est verrouillé dans la position basse d'ouverture de la pince.

A l'intérieur du caisson étanche, un soufflet d'étanchéité 186 est fixé respectivement sur le flasque inférieur 132 et à l'extrémité inférieure de l'ensemble coulissant 146. De plus, l'étanchéité entre l'ensemble tubulaire coulissant 146 et l'ensemble tubulaire tournant 162 est assurée par des joints 188.

A son extrémité inférieure, l'ensemble tubulaire tournant 162 porte un support 190 sur lequel peut être fixé, l'un quelconque des éléments modulaires constitués par les rallonges 88 et par les outils 90 et 92. Une biellette 192 est articulée par l'une de ses extrémités sur le support 190, autour d'un axe 193 orthogonal et décalé par rapport à l'axe commun à la tige 172 et à l'ensemble tournant 162. La biellette 192 est également articulée dans sa partie centrale sur l'extrémité de la tige cylindrique 172, par un axe 195 parallèle à l'axe 193. Enfin, l'extrémité opposée de la biellette 192 est articulée à l'extrémité supérieure d'une tige 194, d'axe parallèle à l'axe de la tige 172, par un axe 197 parallèle aux axes d'articulation 193 et 195.

La tige 194 est montée coulissante dans le support 190 et maintenue normalement dans une position haute illustrée sur la figure 5 par un ressort de compression 196. Cette position haute correspond à la venue en appui d'une partie de plus grand diamètre formée à l'extrémité inférieure de la tige 194 contre un épaulement formé dans le support 190. Dans ces conditions, la face inférieure de la tige 194 affleure la face inférieure plane 198 du support 190.

Le support 190 se prolonge vers le bas au-delà de la face plane 198 sous la forme d'un embout tubulaire 200 apte à venir s'emmancher dans un évidement complémentaire 202 ouvert vers le haut, formé dans la partie supérieure de chacun des éléments modulaires constitués par les rallonges 88 et par les outils tels que 90 et 92. Comme l'illustre la figure 6, il est à noter que chacune des rallonges 88 comporte à son extrémité inférieure un embout tubulaire analogue au tube 200 et permettant d'emmancher bout à bout un nombre quelconque de rallonges.

Comme le montrent les figures 6 et 7, chacun des éléments modulaires 88, 90 et 92 comporte à proximité de son extrémité supérieure un moyen de verrouillage constitué par une clavette cylindrique 204, montée rotative dans la collerette 96 autour d'un axe orthogonal et décalé par rapport à l'axe de l'élément modulaire correspondant. Plus précisément, cet axe est disposé dans une position sensiblement tangentielle par rapport à l'évidement 202 formé dans la partie supérieure de l'élément modulaire. A l'extérieur de la collerette 96, la clavette 204 est solidaire d'une manette 206 permettant d'en commander la rotation. Dans sa partie centrale, la clavette 204 comporte un méplat 208 lui donnant en section la forme d'un demi cercle (figure 6).

Compte tenu de l'emplacement occupé par la clavette 204, l'embout tubulaire 200 peut pénétrer librement à l'intérieur de l'évidement complémentaire 202, lorsque le méplat 208 est orienté vers cet évidement (position de déverrouillage). Au contraire, cette introduction est impossible lorsque le méplat 208 est orienté en sens inverse (position de verrouillage), comme l'illustrent notamment les figures 6 et 7.

L'embout tubulaire 200 présente, en un emplacement situé au niveau de la clavette 204 lorsqu'il est introduit dans l'évidement 202, une rainure 210 de section semi-circulaire. Par conséquent, la rotation de la clavette 204 dans sa position de verrouillage, après introduction du tube de centrage 200 permet de verrouiller la liaison entre le support 190 et l'une des rallonges 88 ou la liaison entre deux quelconques des éléments modulaires.

Comme l'illustrent notamment les figures 6, 8a et 8b, des moyens de blocage sont associés à chacun des moyens de verrouillage constitués par les clavettes 204, afin d'éviter que celles-ci ne soient déverrouillées accidentellement par suite d'une erreur de manutention lorsqu'elles assurent la liaison entre plusieurs ensembles modulaires de la perche d'intervention 94.

Ces moyens de blocage comprennent deux verrous de sécurité 212 qui sont logés dans des lumières pratiquées dans chaque collerette 96, de façon à pouvoir coulisser parallèlement à l'axe de l'élément modulaire entre une position haute de déblocage (figure 8b), dans laquelle l'extrémité inférieure de chacun des verrous 212 affleure la face inférieure 214 de la collerette 96, et une position basse de blocage (figures 6 et 8a), dans laquelle l'extrémité inférieure de chacun des verrous 212 fait saillie au-delà de la face 214.

Comme le montrent mieux les figures 8a et 8b, chacun des verrous 212 comporte une fenêtre 216 que traverse la clavette 204 et dont la hauteur délimite le débattement du verrou entre ces positions hautes et basses. Sur la majeure partie de sa hauteur, la fenêtre 216 a une largeur légèrement supérieure au diamètre de la clavette 206. Cependant, l'extrémité supérieure de la fenêtre 216 comporte une partie 218 de largeur réduite légèrement supérieure au rayon de la clavette 204, cette partie étant située du côté de l'évidement 202 formé dans la partie supérieure de l'élément modulaire, par rapport à l'axe vertical de la fenêtre 216.

Par ailleurs, il est à noter que l'embout tubulaire 200 formé à l'extrémité inférieure de chacun des éléments modulaires comporte des rainures longitudinales (non représentées) dans lesquelles pénètrent automatiquement les verrous 212 lorsque l'embout est emboîté dans l'évidement 202. A cet effet, un indexage en rotation entre les éléments modulaires que l'on désire accoupler est obtenu au moyen d'un doigt 220 qui fait saillie sur la face supérieure de chacune des collerettes 96, de façon à pouvoir pénétrer dans une encoche en vis-à-vis 222 formée dans la partie inférieure du support 190 et de chacun des éléments modulaires. Cet indexage en rotation permet en outre de solidariser en rotation chacun des éléments modulaires adjacents de la perche d'intervention.

Comme l'illustrent les figures 8a et 8b, chacun des verrous 212 est sollicité vers sa position basse de verrouillage par un ressort hélicoïdal de compression 224 interposé entre la face supérieure du verrou et l'extrémité haute de la lumière dans laquelle celui-ci est reçu à l'intérieur de la collerette 96.

Grâce à cet agencement, lorsque les éléments modulaires constitués par les rallonges 88 et les outils 90 et 92 sont posés sur le barillet porte-outils 78, la face inférieure 214 de la collerette 96 repose sur la face supérieure de la plaque 82 du barillet, de sorte que les verrous 212 sont repoussés automatiquement dans leur position haute illustrée sur la figure 8b. Dans cette position, la clavette 204 se trouve dans la partie large de la fenêtre 216, de sorte que la manette 206 peut être tournée librement afin de placer la clavette dans sa position de verrouillage ou dans sa position de déverrouillage.

Au contraire, lorsque les éléments modulaires ne sont pas placés sur le barillet porte-outils 78, chacun des ressorts 224 sollicite les verrous 212 vers le bas. Par conséquent, dès que la manette 206 est tournée afin d'amener la clavette 204 dans sa position de verrouillage, la partie de section semi-cylindrique de la clavette délimitée par le méplat 208 pénètre dans la partie supérieure 218 de largeur réduite de la fenêtre 216, comme l'illustre la figure 8a. Dans ces conditions, le méplat 208 se trouve au contact direct d'un bord de la partie 218 de largeur réduite de la fenêtre 216, de sorte que toute rotation de la clavette 204 devient impossible. Le déverrouillage accidentel est donc bien empêché.

Afin notamment de pouvoir actionner la manette 206 à l'intérieur du caisson étanche 40, l'enceinte mobile d'intervention selon l'invention comporte également des moyens de manipulation annexes constitués par des bras de manipulation auxiliaires 226, par exemple au nombre de quatre, implantés sur deux niveaux dans la face avant 42 du caisson étanche 40. Dans l'exemple de réalisation illustré sur les figures 2 et 4, ces bras de manipulation auxiliaires 226 sont des bras rigides qui traversent de façon rotulante et coulissante la face avant 42 et dont l'actionnement est commandé depuis l'extérieur du caisson par un pistolet équipé d'une gachette de commande de pince. Les extrémités de ces bras de manipulation auxiliaires situés à l'intérieur du caisson étanche 40 sont équipées de pinces de préhension interchangeables 228 qui peuvent être déposées et remplacées, grâce à des râteliers 230 implantés notamment sur la face arrière 44 du caisson.

Afin que l'opérateur puisse effectuer les manipulations désirées à l'intérieur du caisson étanche 40, notamment à l'aide de la perche d'intervention 94 et des bras de manipulation auxiliaires 226, des hublots de vision 232 et 234 sont montés respectivement sur le plateau tournant 120 et sur la face avant 42 du caisson. Pour améliorer encore la vision, d'autres hublots peuvent également être implantés dans les parois du caisson 40, tels qu'un hublot 236 monté sur la face latérale 48 comme l'illustrent les figures 3 et 4.

Afin notamment de permettre l'introduction d'outils non prévus initialement à l'intérieur du caisson 40, un orifice d'accès 104 apparaissant sur la figure 3 est prévu dans le plateau tournant 120, en un emplacement excentré par rapport à son axe x-x. Comme l'orifice d'accès 68, cet orifice 104 est normalement obturé par un rond de sac (non représenté), autour duquel est placée, à l'extérieur du caisson étanche 40, une porte 106 assurant la continuité de la protection radiologique. Cet orifice 104 peut être amené à la verticale d'au moins un logement du barillet porte-outils 78 par une rotation du plateau tournant 120.

L'enceinte mobile d'intervention selon l'invention peut également inclure certains outils aptes à être adaptés sur la perche d'intervention 94 mais dont l'encombrement est trop important pour permettre de les stocker sur le barillet porte-outils 78. Dans ce cas et comme on l'a seulement représenté sur la figure 4 pour ne pas encombrer les autres figures, un ou plusieurs râteliers porte-outils 238, terminés par un disque échancré formant crochet situé au même niveau que la plaque supérieure 82 du barillet 78, sont placés à l'intérieur du caisson 40 et supportés, par exemple, par la face latérale 46. Le disque échancré en forme de crochet du râtelier 238 est placé, de même que le poste de prise 102, le réceptacle 64 et l'ouverture d'accès 56, en un emplacement prévu pour être aligné avec la verticale passant par le centre de la rotule 130 du mécanisme 128 supportant la perche d'intervention 94, sous l'effet d'une rotation appropriée du plateau tournant 120.

Le râtelier porte-outils 238 peut notamment supporter un module d'aspiration 240 dont l'extrémité supérieure est équipée d'une collerette 96, de la même manière que chacun des outils et des rallonges constituant les éléments modulaires aptes à être mis bout à bout pour former la perche d'intervention 94. Ce module d'aspiration 240, prévu pour être monté directement sur le support 190 du mécanisme 128, est muni d'une turbine d'aspiration et d'un filtre (non représentés).

Pour améliorer la visibilité, un ou plusieurs projecteurs sont avantageusement montés de façon orientable à l'intérieur du caisson étanche 40, par exemple sur le plafond 50. L'éclairage peut être complété par l'utilisation d'une baladeuse (non représentée) apte à être descendue dans le fourreau 16 d'accès à l'installation 18.

Afin d'assurer la vision des opérations effectuées à l'intérieur du fourreau 16, des caméras vidéo 242 peuvent être fixées sur chacun des outils tels que les outils 90 et 92 représentés sur les figures 9 et 10. Ces caméras vidéo 242 sont équipées d'anneaux d'accrochage 244 permettant de les suspendre à un support 246 monté par exemple sur la face arrière 44 du caisson étanche, comme l'illustre la figure 4. Chacune des caméras 242 est également équipée d'un système de fixation permettant de la monter sur chacun des outils tels que 90 et 92, en utilisant l'un des bras de manipulation auxiliaires. Ce système de fixation peut être un système à clavette comparable à celui qui sert à relier entre eux chacun des éléments modulaires de la perche d'intervention.

Le câble 248 reliant chacune des caméras vidéo à l'équipement vidéo (non représenté) situé à l'extérieur du caisson 40 traverse la paroi de ce dernier de façon étanche, par exemple la face latérale 48 comme l'illustre la figure 4, en même temps qu'un flexible permettant d'alimenter en eau l'outil de nettoyage haute pression.

L'enceinte mobile d'intervention selon l'invention est également équipée d'un circuit de ventilation et de mise en dépression du volume intérieur au caisson étanche 40. Ce circuit, qui n'est pas représenté en totalité sur les figures, permet d'aspirer l'air contenu à l'intérieur du caisson au travers d'un filtre 250 représenté schématiquement sur la figure 3. Le conduit de ventilation 252 (figure 1) traverse ensuite le plafond 50 du caisson pour être relié à une pompe (non représentée) située à l'extérieur de ce dernier ou au circuit de ventilation du sas à opercules. On réalise ainsi la mise en dépression et le filtrage de l'atmosphère contenue dans le caisson 40. Il est à noter que le filtre 250 est interchangeable et peut être déposé dans la poubelle 66 à l'aide de l'un des bras de manipulation 226, de façon à être évacué hors du caisson étanche.

Les différents outils pouvant équiper la perche d'intervention 94 comprennent notamment une ou plusieurs pinces d'intervention telles que celle de la figure 9, un module d'aspiration tel que le module 240 placé sur le réceptacle 238, une ou plusieurs rallonges d'aspiration telles que celle de la figure 10, et un module de pompage (non représenté).

Comme l'illustre la figure 9, la pince d'intervention 90 comporte à son extrémité supérieure, comme tous les autres éléments modulaires, une collerette 96. Cette collerette 96 est prolongée vers le bas par un corps effilé 254 portant à son extrémité inférieure une mâchoire fixe 256. Cette mâchoire 256 est orientée approximativement à angle droit par rapport au corps effilé 254. Une mâchoire mobile 258 est articulée sur ce dernier, immédiatement au-dessus de la mâchoire fixe 256, par un axe 260 orienté selon une direction perpendiculaire à l'axe du corps effilé 254 ainsi qu'à la direction définie par les mâchoires 256 et 258.

La pince d'intervention 90 comprend de plus une tige cylindrique rectiligne 262 qui s'étend sur toute la longueur du corps effilé 254 et parallèlement à celui-ci, du côté opposé aux mâchoires 256 et 258. L'extrémité supérieure de la tige 262 est reçue de façon coulissante dans un perçage traversant la collerette 96 et dans lequel est également logé un ressort hélicoïdal de compression 264 entourant la tige 262 et placé entre un épaulement formé sur cette dernière et un épaulement formé à l'intérieur du perçage de la collerette 96, de façon à exercer sur la tige 262 une force tendant à la déplacer vers le haut.

La tige 262 est également guidée à proximité de son extrémité inférieure par un perçage formé dans une excroissance 266 du corps effilé 254. En dessous de cette excroissance, la tige 262 comporte à son extrémité inférieure une partie 268 en forme de disque, qui vient se loger dans une encoche formée dans la mâchoire mobile 258, en un emplacement opposé à la partie active de celle-ci, par rapport à son axe d'articulation 260.

Grâce à l'agencement qui vient d'être décrit, le ressort 264 sollicite normalement la tige 262 dans une position haute correspondant à la venue en appui de la mâchoire mobile 258 contre la mâchoire fixe 256, c'est-à-dire à la fermeture de la pince. Dans ces conditions, l'extrémité supérieure de la tige 262 affleure la face supérieure de la collerette 96. Afin de commander l'ouverture de la pince, il suffit donc d'exercer sur l'extrémité supérieure de la tige 262 un effort orienté vers le bas et tendant à comprimer le ressort 264.

Si l'on suppose que la pince d'intervention 90 est fixée directement sur le support 190 représenté sur la figure 5, la tige 262 se trouve dans le prolongement de la tige 194 coulissant dans ce support. Par conséquent, l'ouverture de la pince peut être commandée en assurant un déplacement vers le bas de la tige 194 à l'encontre du ressort 196. Un tel déplacement peut être obtenu en faisant pivoter vers le bas la manette 178 autour de son axe 180.

Si, comme cela est habituellement le cas, une ou plusieurs rallonges 88 sont placées entre le support 190 et la pince d'intervention 90, le déplacement vers le bas de la tige 194 est transmis à la tige 262 par une tige coulissante 270 montée sur chacun des modules 88 parallèlement à ce dernier et sur toute sa longueur (figure 6). Chacune des tiges 270 est normalement maintenue par un ressort de compression hélicoïdal 272 dans une position haute pour laquelle les extrémités de cette tige 270 affleurent les faces supérieures et inférieures de la rallonge 88.

Comme l'illustre la figure 9, l'une des caméras vidéo 242 peut être reçue sur le côté du corps effilé 254 opposé à la tige 262. La caméra 242 est verrouillée sur le corps effilé 254 par un mécanisme de verrouillage 271, et maintenue en place à son extrémité inférieure par une pièce d'emboîtement souple 272, à section en forme de C.

Sur la figure 10, on a représenté une rallonge d'aspiration 92 qui comporte elle aussi à son extrémité supérieure une collerette 96. Cette rallonge comprend de plus un tube 274 qui se termine à son extrémité inférieure par un embout effilé et incurvé 276.

La rallonge d'aspiration 92 est conçue pour être placée à l'extrémité d'une série de rallonges 88, lorsque l'outil d'aspiration 240 est raccordé directement sur le support 190. Comme avec les autres outils, le nombre de rallonges dépend du niveau d'intervention souhaité. Comme l'illustre schématiquement la figure 6 afin que l'aspiration puisse se faire au travers des rallonges 88, chacune d'entre elles est traversée sur toute sa longueur par un passage 278.

Comme les autres outils tels que la pince d'intervention 90, la rallonge d'aspiration 92 est prévue pour supporter, par l'intermédiaire d'un mécanisme de verrouillage 279 et d'un support souple 280 à section en forme de C, une caméra vidéo 242.

La réalisation d'une intervention sur l'installation 18 à l'intérieur de la cellule 12 va à présent être décrite brièvement en se référant aux figures.

Dans un premier temps, le sas à opercules 26 est mis en place pour permettre le démontage du sous-ensemble mobile obturant normalement le fourreau 16. Comme on l'a déjà mentionné, ce démontage est réalisé au moyen d'une enceinte mobile d'évacuation de matériel d'un type connu quine fait pas partie de l'invention.

L'enceinte mobile d'intervention 38 selon l'invention est ensuite accostée sur le sas à opercules 26, à l'aide de moyens de verrouillage appropriés (non représentés). Les portes 34 et 36 du sas à opercules 26 ainsi que la porte 60 fermant l'enceinte mobile d'intervention 38 à son extrémité inférieure sont alors escamotées à l'intérieur du sas à l'aide du mécanisme classique équipant celui-ci.

Les opérateurs forment alors la perche d'intervention 94, à l'aide des différents éléments modulaires qui sont à sa disposition à l'intérieur du caisson étanche 40, en tenant compte à la fois de la profondeur à laquelle doit avoir lieu l'intervention et de la nature de cette intervention. Dans la procédure d'assemblage de la perche, il est à noter que l'on constitue celle-ci en commençant par le bas, c'est-à-dire généralement par l'outil qui peut être une pince, une rallonge d'aspiration ou un outil de pompage, puis en remontant progressivement en plaçant notamment au-dessus de cet outil autant de rallonges que nécessaire.

Dans le cadre de cette procédure, l'opérateur place d'abord le mécanisme 128 dans une position pour laquelle les différents ensembles tubulaires 134, 146, et 162 ainsi que la tige 172 sont disposés verticalement. Cette opération est effectuée manuellement en agissant sur les volants 136, grâce aux informations fournies par des repères prévus à cet effet. L'opérateur fait ensuite tourner le barillet porte-outils 78, en agissant manuellement sur le volant 98, de façon à présenter au poste de prise 102 l'élément modulaire souhaité. Le support escamotable 108 est alors placé dans sa position escamotée illustrée en trait plein sur la figure 4, en agissant éventuellement sur le volant 114 s'il n'est pas déjà dans cette position.

Ces préparatifs étant terminés, l'opérateur fait pivoter le plateau tournant 120, de façon à amener l'axe du mécanisme 128 à la verticale du poste de prise 102. A l'aide de l'un des bras de manutention 226, l'opérateur actionne la manette 206 du sous-ensemble qui se trouve sur le barillet porte-outils 78 au poste de prise 102, de façon à amener la clavette 204 dans sa position de déverrouillage. En agissant sur le volant 158, l'opérateur descend alors l'ensemble tubulaire 146 dans lequel sont placés l'ensemble tubulaire tournant 162 et la tige centrale 172, de façon à faire pénétrer l'embout tubulaire 200 du support 190 dans le logement 202 de l'élément modulaire correspondant. La descente se poursuit jusqu'à la venue au contact de ces deux pièces. L'opérateur actionne à nouveau la manette 206 à l'aide de l'une des pinces annexes 226, pour amener la clavette 204 en position verrouillée.

Lorsque l'élément modulaire correspondant a été verrouillé sur le support 190 de la manière qui vient d'être décrite, l'opérateur actionne en sens inverse le volant 158, de façon à lever l'ensemble d'une hauteur suffisante pour permettre de dégager la collerette 96 de l'élément modulaire du lamage de sécurité 97 formé dans la plaque supérieure 82 du barillet porte-outils 78. On fait alors pivoter le plateau tournant 120 dans le sens des aiguilles d'une montre sur la figure 4, ce qui a pour effet de dégager complètement l'élément modulaire saisi par le mécanisme 128 du barillet porte-outils 78 et d'amener cet élément modulaire dans l'axe du fourreau 16.

L'ensemble ainsi constitué est alors descendu au travers du sas à opercules 26, jusqu'à ce que la majeure partie de l'élément modulaire qui vient d'être saisi, à l'exception de sa collerette supérieure 96, arrive à un niveau situé en dessous du niveau du support escamotable 108. L'opérateur fait alors pivoter manuellement ce dernier en agissant sur le volant 114, de façon à l'amener dans l'axe du fourreau 16 et au contact de la partie du corps de l'élément modulaire située immédiatement en dessous de la collerette 96. La descente de l'ensemble est alors poursuivie en agissant sur le volant 158, jusqu'à ce que la collerette 96 repose sur le support escamotable 108.

L'opérateur déverrouille ensuite l'élément modulaire reposant sur le support escamotable 108 du support 190 à l'aide de l'un des bras de préhension 226, en agissant sur la manette 206 comme décrit précédemment. L'ensemble coulissant 146 portant le support 190 est alors remonté, de façon à permettre la préhension sur le barillet porte-outils 78 d'un autre élément modulaire tel qu'une rallonge 88.

Lorsque cet élément modulaire a été saisi d'une manière similaire à celle qui a été décrite précédemment pour le premier élément, puis amené dans l'axe du fourreau 16, l'ensemble ainsi constitué est descendu de façon à emboîter l'embout tubulaire 200 de la rallonge 88 dans l'évidement 202 de l'élément modulaire saisi précédemment et qui repose alors sur le support escamotable 108. Les deux éléments sont ensuite verrouillés en agissant sur la manette 206 correspondante à l'aide d'une pince annexe 226.

L'ensemble ainsi formé est légèrement soulevé en agissant sur le volant 158, de façon à dégager la collerette 96 de l'élément modulaire qui se trouvait auparavant sur le support escamotable 108 du lamage 109 prévu sur ce dernier. Le support escamotable 108 peut alors être ramené dans sa position escamotée illustrée en trait plein sur la figure 4.

Si un nouvel élément modulaire tel qu'une rallonge 88 doit être ajouté à la perche d'intervention 94, l'ensemble suspendu au support 190 est descendu à l'aide du volant 158 de façon à amener l'élément modulaire accroché au support 190 à un niveau tel que sa collerette 96 se trouve située à un niveau légèrement supérieur à celui du support escamotable 108. Le support 108 est alors ramené dans l'axe du fourreau 16 comme illustré en traits mixtes sur la figure 4 et les éléments préassemblés de la perche d'intervention sont posés sur ce support escamotable, puis déverrouillés du support 190 en agissant sur la manette 206 correspondante à l'aide de l'un des bras de manipulation auxiliaires 226, afin de permettre au mécanisme 128 d'aller chercher un autre module.

Lorsque la perche d'intervention doit comprendre un outil tel que le module d'aspiration 240 monté sur un porte-outils annexe 238, la prise de cet outil par le mécanisme 128 est assurée de la même manière que pour tous les autres ensembles modulaires, en amenant le mécanisme 128 à la verticale du porte-outils 238 au lieu de l'amener à la verticale du poste de prise 102.

Par ailleurs, lors de l'assemblage de la pince d'intervention, les éléments modulaires tels que la pince 90 ou la rallonge d'aspiration 92 devant porter une caméra d'observation 242 sont équipés de cette caméra à l'aide des bras de manipulation 226 lorsque l'élément modulaire correspondant est suspendu au support 190 du mécanisme 128. Les bras 226 permettent en effet de saisir les caméras sur le râtelier 246, le câble lié à la caméra étant également lové sur ce râtelier et déroulé à l'aide des bras 226 au fur et à mesure de la descente de l'outil.

Dans le cas de l'utilisation d'un outil de pompage constitué d'un hydroéjecteur alimenté par de l'eau sous pression, le flexible servant à alimenter l'outil en eau est déroulé en même temps que le câble de la caméra qui l'équipe.

Lorsque la perche d'intervention a été totalement constituée, l'opérateur effectue les opérations souhaitées, en s'aidant des images fournies par les caméras. Pour cela, il agit sur les différentes commandes manuelles du mécanisme 128 afin de donner à la perche la position exacte souhaitée et, le cas échéant, de commander l'ouverture et la fermeture de la pince.

Dans le cadre de ces opérations, des débris saisis par la pince peuvent être déposés dans la poubelle 66, après que la perche 94 ait été remontée en agissant sur le volant 158, par une simple rotation du plateau tournant 120, étant donné que le réceptacle 64 sur lequel est placée la poubelle est également situé sur le trajet parcouru par le mécanisme 128 lorsque le plateau tournant 120 est entraîné en rotation. Il est à noter que la perche d'intervention 94 peut également être équipée d'une pince à crochet verrouillable conçue spécialement de façon à saisir la poubelle 66. La perche est alors utilisée pour amener la poubelle au travers du sas à opercules 26 et pour la placer auprès de la zone à nettoyer.

Bien entendu, l'invention n'est pas limitée au mode de réalisation qui vient d'être décrit à titre d'exemple, mais en couvre toutes les variantes. On comprendra notamment que la forme du caisson étanche 40 peut être différente de celle qui a été décrite, de même que l'implantation à l'intérieur de celui-ci des différents éléments. Par ailleurs, la nature des moyens de manipulation annexes constitués dans l'exemple décrit par les bras 226 peut être différente et il peut notamment s'agir de télémanipulateurs plus complexes. En outre, pour certains types d'interventions, la poubelle 66 ainsi que le porte-outils annexe 238 peuvent être supprimés. Le nombre et l'implantation des hublots et des orifices d'accès peuvent également être différents. Enfin, on comprendra aisément que le nombre et la nature des outils utilisés ne sont pas limités par les descriptions qui ont été faites précédemment.

## Revendications

1. Enceinte mobile d'intervention apte à être accostée sur un orifice d'accès (14) formé dans une paroi supérieure (10) d'une installation (18), afin d'intervenir sur cette dernière, cette enceinte comprenant :
- un caisson étanche (40) pourvu d'une paroi latérale (42,44,46,48) d'un plancher (52) percé d'une ouverture d'accès circulaire (56) normalement obturée par une porte (60) ; et d'un plafond (50) comportant un plateau tournant (120) d'axe parallèle et décalé par rapport à l'axe de l'ouverture d'accès ;
- un barillet porte-outils (78) logé dans le caisson et apte à tourner autour d'un axe parallèle et décalé par rapport à l'axe de l'ouverture d'accès, ce barillet comportant des réceptacles (86) à sa périphérie ; et
- des éléments modulaires comprenant au moins une rallonge (88) et au moins un outil, aptes à être reçus individuellement dans lesdits réceptacles ;
caractérisé par le fait que :
- l'axe du barillet porte-outils (78) est également parallèle et décalé par rapport à l'axe du plateau tournant ;
par le fait que l'enceinte comprend de plus :
- un support escamotable (108) logé dans le caisson et apte à occuper une position rétractée totalement dégagée de l'ouverture d'accès et une position active située selon l'axe de cette dernière, de façon à pouvoir supporter provisoirement les éléments modulaires ;
- un mécanisme (128) de supportage et de commande de la perche d'intervention (94), implanté sur le plateau tournant (120) en un emplacement apte à être placé à volonté selon l'axe de l'ouverture d'accès et selon l'axe d'un poste de prise (102) sur lequel peut être amené chaque réceptacle du barillet, sous l'effet d'une rotation du plateau tournant, ce mécanisme permettant des mouvements de translation de la perche selon son axe, de rotation autour de son axe, de pivotement autour dudit. emplacement et d'actionnement de l'outil ; et
- des moyens (126,98,114) pour commander, depuis l'extérieur du caisson, des rotations du plateau tournant, du barillet porte-outils et du support escamotable; et par le fait que les éléments modulaires et l'outil sont aptes à être assemblés bout à bout pour former une perche d'intervention (94).

2. Enceinte selon la revendication 1, caractérisée par le fait que chaque élément modulaire (88,90,92) comprend un moyen de verrouillage (204) apte à occuper une position verrouillée de liaison avec un élément modulaire voisin et une position déverrouillée de montage et de démontage, des moyens de manipulation annexes (226) manoeuvrés de l'extérieur du caisson étant placés dans ce dernier pour commuter les moyens de verrouillage entre leurs positions verrouillée et déverrouillée.

3. Enceinte selon la revendication 2, caractérisée par le fait que chaque moyen de verrouillage (204) est neutralisé par des moyens de blocage (212) lorsque l'élément modulaire (88,90,92) correspondant est suspendu, ce moyen de blocage libérant le moyen de verrouillage correspondant lorsque l'élément modulaire est posé.

4. Enceinte selon l'une quelconque des revendications 2 et 3, caractérisée par le fait que les moyens de manipulation annexes comprennent au moins un bras de manipulation auxiliaire (226) traversant la paroi latérale du caisson et au moins une pince annexe (228) montée sur ce bras et apte à être déposée sur un râtelier porte-pince (230) placé dans le caisson.

5. Enceinte selon l'une quelconque des revendications précédentes, caractérisée par le fait qu'elle comprend de plus, sur le plancher (52) dudit caisson, un réceptacle (64) pour une poubelle (66), apte à être aligné avec la perche d'intervention (94) lors d'une rotation du plateau tournant.

6. Enceinte selon la revendication 5, caractérisé par le fait que la paroi latérale (46) comporte un passage (68) d'introduction et d'évacuation de la poubelle, normalement fermé par une porte (72), à proximité du réceptacle de la poubelle.

7. Enceinte selon l'une quelconque des revendications précédentes, caractérisée par le fait que la paroi latérale (46) du caisson supporte au moins un râtelier porte-outils (238), apte à être aligné verticalement avec la perche de manipulation (94) lors d'une rotation du plateau tournant.

8. Enceinte selon l'une quelconque des revendications précédentes, caractérisée par le fait qu'elle comprend au moins un outil choisi dans le groupe comprenant une pince d'intervention (90), un outil d'aspiration (240), une rallonge d'aspiration (92) et un outil de pompage.

9. Enceinte selon l'une quelconque des revendications précédentes, caractérisée par le fait que des moyens d'observation à distance (242) sont prévus pour être fixés sur les outils de façon démontable.

10. Enceinte selon l'une quelconque des revendications précédentes, caractérisée par le fait que le plateau tournant (120) comporte un passage (104) d'introduction et d'évacuation des éléments modulaires, normalement fermé par une porte (106), et apte à être aligné verticalement avec au moins un logement du barillet porte-outils (78), lors d'une rotation du plateau tournant.

11. Enceinte selon l'une quelconque des revendications précédentes, caractérisée par le fait que le caisson étanche (40) comporte des moyens de ventilation (250,252), des hublots (232,234,236), et des moyens d'éclairage intérieur.

## Patentansprüche

1. Mobiles Arbeitsgefäß zum Anbringen an einer Zugangsöffnung (14), ausgebildet in einer oberen Wand (10) einer Anlage (18) für eine Intervention an dieser letzteren, wobei dieses Arbeitsgefäß umfaßt:
- einen dichten Kasten (40), versehen mit einer Seitenwand (42,44,46,48), einem Boden (52), durchbohrt von einer normalerweise durch eine Tür (60) verschlossenen kreisförmigen Zugangsöffnung (56), und mit einer Decke (50), die eine Schaltplatte (120) umfaßt, deren Achse parallel ist und versetzt in bezug auf die Achse der Zugangsöffnung;
- eine Werkzeugträgertrommel (78), untergebracht in dem Arbeitsgefäß, drehbar um eine Achse, die parallel und versetzt ist bezüglich der Achse der Zugangsöffnung, wobei diese Trommel an ihrem Umfang Aufnahmesitze (86) umfaßt; und
- Modularelemente, die wenigstens eine Verlängerung (88) umfassen und wenigstens ein Werkzeug, geeignet, einzeln aufgenommen zu werden in den genannten Aufnahmesitzen;
**gekennzeichnet durch die Tatsache,** daß
- die Achse der Werkzeugträgertrommel (78) ebenfalls parallel und versetzt ist in bezug auf die Achse der Schaltplatte;
**durch die Tatsache,** daß das Arbeitsgefäß außerdem umfaßt:
- einen einklappbaren Träger (108), untergebracht in dem Kasten, der eine zurückgezogene Stellung der totalen Freigabe der Zugangsöffnung einnehmen kann und eine aktive Stellung, der Achse dieser letzteren entsprechend, um vorübergehend die Modularelemente stützen zu können;
- eine Vorrichtung (128) zum Tragen und Steuern der Interventionsstange (94), an der Schaltplatte (120) an einer Stelle befestigt, die nach Belieben entsprechend der Achse der Zugangsöffnung und entsprechend der Achse einer Aufnahmestation (102) angeordnet werden kann, zu der jeder Aufnahmesitz der Trommel unter der Wirkung einer Drehung der Schaltplatte gebracht werden kann, wobei diese Vorrichtung Bewegungen der Parallelverschiebung der Stange entsprechend ihrer Achse, der Drehung um ihre Achse, der Schwenkung um die genannte Stelle und der Werkzeugbetägigung ermöglicht; und
- Einrichtungen (126,98,114), um von außerhalb des Kastens Drehungen der Schaltplatte, der Werkzeugträgertrommel und des einklappbaren Trägers zu steuern;
**und durch die Tatsache,** daß die Modularelemente und das Werkzeug mittels ihrer Enden zusammengebaut werden können, um eine Interventionsstange (94) zu bilden.

2. Arbeitsgefäß nach Anspruch 1, dadurch gekennzeichnet, daß jedes Modularelement (88,90,92) eine Verriegelungseinrichtung (204) umfaßt, die eine verriegelte Stellung der Verbindung mit einem benachbarten Modularelement einnehmen kann und eine entriegelte Montage- und Demontagestellung, wobei angebaute Betätigungseinrichtungen (226), die von außerhalb des Kastens betägtigt werden, in diesem letzteren angebracht sind, um die Verriegelungseinrichtungen umzuschalten zwischen ihren verriegelten und entriegelten Stellungen.

3. Arbeitsgefäß nach Anspruch 2, dadurch gekennzeichnet, daß jede Verriegelungseinrichtung (204) neutralisiert wird durch Blockierungseinrichtungen (212), wenn das entsprechende Modularelement (88,90,92) eingehängt ist, wobei diese Blockierungseinrichtung die entsprechende Verriegelungseinrichtung freigibt, wenn das Modularelement abgelegt wird.

4. Arbeitsgefäß nach einem der Ansprüche 2 und 3, dadurch gekennzeichnet, daß die angebauten Betätigungseinrichtungen wenigstens einen Betätigungshilfsarm (226) umfassen, der die Seitenwand des Kastens durchquert, und wenigstens eine Anbauzange (228), angebracht auf diesem Arm und geeignet, abgelegt zu werden auf einem in dem Kasten befindlichen Zangenträgergestell (230).

5. Arbeitsgefäß nach einem der vorhergehenden Ansprüche, dadurch gekennzeichnet, daß es außerdem auf dem Boden (52) des genannten Kastens eine Aufnahme (64) für einen Abfallbehälter (66) umfaßt, geeignet zur Ausrichtung mit der Interventionsstange (94) bei einer Drehung der Schaltplatte.

6. Arbeitsgefäß nach Anspruch 5, dadurch gekennzeichnet, daß die Seitenwand (46) einen Durchlaß (68) zum Einführen und Entnehmen des Abfallbehälters umfaßt, normalerweise verschlossen durch eine Tür (72), nahe bei der Aufnahme des Abfallbehälters.

7. Arbeitsgefäß nach einem der vorhergehenden Ansprüche, dadurch gekennzeichnet, daß die Seitenwand (46) des Kastens wenigstens ein Werkzeugträgergestell (238) umfaßt, vertikal ausrichtbar mit der Betätigungsstange (94) bei einer Drehung der Schaltplatte.

8. Arbeitsgefäß nach einem der vorhergehenden Ansprüche, dadurch gekennzeichnet, daß es wenigstens ein Werkzeug umfaßt, ausgewählt aus der Gruppe, die eine Interventionszange (90), ein Absaugwerkzeug (240), eine Absaugverlängerung (92) und ein Pumpwerkzeug umfaßt.

9. Arbeitsgefäß nach einem der vorhergehenden Ansprüche, dadurch gekennzeichnet, daß Fernbeobachtungseinrichtungen (242) vorgesehen sind, um demontierbar an den Werkzeugen befestigt zu werden.

10. Arbeitsgefäß nach einem der vorhergehenden Ansprüche, dadurch gekennzeichnet, daß die Schaltplatte (120) einen Durchlaß (104) zum Einführen und Entnehmen der Modularelemente umfaßt, normalerweise verschlossen durch eine Tür (106) und vertikal ausrichtbar mit wenigstens einem Sitz der Werkzeugträgertrommel (78) bei einer Drehung der Schaltplatte.

11. Arbeitsgefäß nach einem der vorhergehenden Ansprüche, dadurch gekennzeichnet, daß der dichte Kasten (40) Ventilationseinrichtungen (250,252), Fenster (232,234,236) und Innenbeleuchtungseinrichtungen umfaßt.

## Claims

1. Mobile intervention chamber able to be docked on an access orifice (14) formed in one upper wall (10) of an installation (18) so as to intervene of the latter, said chamber comprising:
- a sealed caisson (40) provided with one lateral wall (42, 44, 46, 48); a floor (52) pierced with one circular access opening, normally blocked off by a door (60); and a ceiling (50) comprising a rotating plate (120) with an axis offset and parallel with respect to the axis of the access opening;
- a tool holder barrel (78) housed in the caisson and able to rotate around an axis offset and parallel with respect to the axes of the rotary plate and the access opening, this barrel comprising receptacles (86) on its periphery;
- modular elements including at least one extension piece (88) and at least one tool able to be individually received in said receptacles;
characterized in that:
the axis of the tool holder barrel (78) is also parallel and displaced with respect to the axis of the rotary plate; that the chamber also comprises:
- a retractable support (108) housed in the caisson and able to occupy one fully retracted position uncoupled from the access opening and one active position situated along the axis of the latter so as to be able to temporarily support the modular elements;
- a mechanism (128) for supporting and controlling the intervention pole (94) and implanted on the rotary plate (120) at a location suitable for being placed at will along the axis of the access opening and along the axis of a holding station (102) on which each receptacle of the barrel is able to be brought,
this mechanism allowing for translation movements of the pole along its axis, for rotating around its axis, for pivoting around said location and for actuating the tool;
- means (126, 98, 114) to control from outside the caisson the rotations of the rotary plate, the tool holder barrel and the retractable support;
and that the modular elements and the tool can be assembled end-to-end for forming an intervention pole (94).

2. Chamber according to claim 1, characterized in that each modular element (88, 90, 92) comprises a locking means (204) able to occupy a locked position connecting with an adjacent modular element and an unlocked assembly and disassembly position, auxiliary manipulating means (226) manipulated from outside the caisson being placed in the latter in order to switch the locking means between their locked and unlocked positions.

3. Chamber according to claim 2, characterized in that each locking means (204) is neutralized by blocking means (212) when the corresponding modular element (88, 90, 92) is suspended, said blocking means releasing the corresponding locking means when the modular element is in place.

4. Chamber according to either of the claims 2 and 3, characterized in that the auxiliary manipulating means incorporate at least one auxiliary manipulating arm (226) traversing the lateral wall of the caisson and at least one auxiliary gripping pliers (228) mounted on said arm and which can be deposited on a pliers - holding rack (230) placed in the caisson.

5. Chamber according to any one of the preceding claims, characterized in that it also comprises on the floor (52) of said caisson, a receptacle (64) for a waste bin (66), which can be aligned with the intervention pole (94) during a rotation of the rotary plate.

6. Chamber according to claim 5, characterized in that the lateral wall (46) has a passage (68) for the introduction and removal of the waste bin, which is normally closed by the door (72), in the vicinity of the waste bin receptacle.

7. Chamber according to any one of the preceding claims, characterized in that the lateral wall (46) of the caisson supports at least one tool-holder rack (238), which can be vertically aligned with the manipulation pole (94) during a rotation of the rotary plate.

8. Chamber according to any one of the preceding claims, characterized in that it also comprises a tool chosen from within the group including intervention pliers (90), a suction tool (240), a suction extension piece (92) and a pumping tool.

9. Chamber according to any one of the preceding claims, characterized in that remote observation means (242) are provided for fixing in dismantlable manner on tools.

10. Chamber according to any one of the preceding claims, characterized in that the rotary plate (120) has a passage (104) for the introduction and discharge of modular elements, which is normally closed by a door, and which can be vertically aligned with at least one recess of the tool-holder barrel (78) during a rotation of the rotary plate.

11. Chamber according to any one of the preceding claims, characterized in that the tight caisson (40) has ventilating means (250, 252), inspection windows (232, 234, 236) and internal illumination means.
